# EUROPEAN PATENT SPECIFICATION

(11) **EP 1 175 346 B1**
(45) Date of publication and mention of the grant of the patent: **06.08.2003**
(21) Application number: 00917243.8
(22) Date of filing: 27.04.2000
(51) Int. Cl.: B65B 59/00

(54) **A CONVEYOR FOR BLISTER PACKS OR PILES OF BLISTER PACKS, WITH RECEIVING SEATS HAVING VARIABLE HEIGHT**
FÖRDERER FÜR BLISTERVERPACKUNGEN ODER STAPEL VON BLISTERVERPACKUNGEN, MIT AUFNAHMEFÄCHERN MIT VARIABLER HÖHE
BANDE TRANSPORTEUSE MUNIE DE SIEGES DE RECEPTION A HAUTEUR REGLABLE POUR EMBALLAGES-COQUE OU PILES D'EMBALLAGES-COQUE

(30) Priority: 05.05.1999 IT BO990056 U
(43) Date of publication of application: 30.01.2002
(73) Proprietor: I.M.A. Industria Macchine Automatiche S.p.A., 40064 Ozzano Emilia (Bologna) (IT)
(72) Inventor: GAUDENZI, Rodolfo, I-40139 Bologna (IT)
(74) Representative: Dall'Olio, Giancarlo
(86) International application number: IB0000544
(87) International publication number: WO00068088

(56) References cited:
- EP-A- 0 819 609
- US-A- 5 145 053

## Description

### FIELD OF THE INVENTION

The present invention relates to the production of automatic machines, in particular, to the production of boxing machines which are designed for inserting blister packs, or piles of blister packs, into boxes.

### DESCRIPTION OF THE PRIOR ART

It is known that one of the task of boxing machines is to organize and group the articles to be boxed, so as to facilitate the packaging thereof.

With reference, for example, to blister packs, e.g. blister packs containing pharmaceuticals or other articles of small dimensions, usually, one or more packs are introduced in each box.

Known boxing machines are equipped with an endless conveyor, e.g. including chains arranged side by side or a belt, along which there are delimited seats.

Each of the so delimited seats is aimed at receiving one pack or one pile of packs, which is subsequently introduced in a corresponding box by known means.

The conveyor is operated with intermittent motion according to predetermined steps.

The seats on the conveyor are made by walls, which are fastened to the conveyor surface crosswise and perpendicular thereto.

The walls can be continuous along the whole width of the conveyor or can include more segments set in alignment with each other.

According to different known techniques, the distance between the adjacent walls defining the seats can be changed more or less automatically, so as to adapt them to different sizes of the blister packs.

The seats are fed by magazines, filled directly by the machine producing packs, or, in cheapest solutions, with packs withdrawn manually from the producing machine.

The packs are dropped from the magazine into each seat.

It is preferable that magazine outlet mouth is situated as close as possible to the bottom level of the conveyor seat which receives the lowermost pack, so as to prevent it from jerking and to place it in the best possible way.

Moreover, the smaller the number of the packs to be placed in the seats, the shorter the dwelling of the conveyor for filling the seats.

Therefore, it is preferable that the blister pack released from the magazine have enough time to reach the seat bottom, or the top of the pile being formed, before the conveyor starts again to place another seat under the magazine.

For this purpose, it is necessary to reduce as much as possible the distance that the pack must cover after leaving the magazine by moving the latter nearer to the seat.

However, this is not always possible because the height of the walls defining the seat is equal to the maximum height of the pile of blister packs to be boxed, in order to make the conveyor as versatile as possible.

When one or more blister packs are to be introduced into a box, it or they fall with a jerk on the seat bottom and often take disordered, which causes problems during their introduction into the box. Moreover, due to the conveyor sudden start, it is possible that the single blister pack, or the uppermost blister pack of the small pile, is struck before reaching the bottom, thus increasing the possibility of disorderly placement.

In order to avoid this problem, some more valuable boxing machines have the walls defining the seats interchangeable with others, suitable for the height of the pile to be formed.

However, the walls substitution requires long stops in the production process as well as expensive operation of personnel in difficult conditions. Moreover, the walls substitution causes frequent maintenance and repair of the parts which are most stressed during the size change.

The publication EP-A-0819 609 describes a container conveyor which comprises a plurality of holders for high and low containers, and attachments equal in number to the number of holders and removably mountable on the holders. Each of the holders comprises a flat bottom plate for supporting the container thereon, and a flat side plate. The height of the side plate is equal to the height of the low container. The attachment has a height equal to the difference between the high and low containers in height. The side plate is formed in its top with an engaging bore. A ball plunger is screwed within a peripheral wall defining a threaded bore and has a ball partly projectable into the engaging bore. The attachment has an insert rod extending downward from its bottom face and insertable into the engaging bore. The insert rod is formed in its outer peripheral surface with an engaging recess for the ball to fit in.

### SUMMARY OF THE INVENTION

The object of the present invention is that of changing the conveyor walls shape, so that the height of the walls defining the conveyor seats can be changed quickly and easily, thus allowing to obtain always best placing of the blister packs, without too high expenses caused by the walls substitution.

These and other features of the invention are attained by providing a conveyor for blister packs, or piles of blister packs, the conveyor including delimiting means, fastened crosswise to endless support means, so as to define a series of subsequent seats for receiving said blister packs or piles of blister packs, with extensions removably fixed to said delimiting means for adapting the height of the receiving seats in relation to the height of the blister packs or piles of blister packs, said conveyor further having the features according to the characterising portion of claim 1.

### BRIEF DESCRIPTION OF THE DRAWINGS

The present invention will become evident from the following description, with reference to the enclosed drawings, in which:
- Figure 1 is a partial lateral view of a conveyor, which incorporates the present invention;
- Figure 2 is a schematic top view of a functional section of the conveyor.

### BEST MODE OF CARRYING OUT THE INVENTION

With reference to the above mentioned figures, there is shown a conveyor 1 for conveying either blister packs 5 or piles of blister packs P.

The conveyor 1 includes delimiting means 2, fastened crosswise to an endless support means 3, so as to define a series of subsequent seats 4 receiving blister packs 5 or piles of blister packs P.

According to techniques known in the art, especially in the boxing machine production, the endless support means 3 include a pair of endless chains 18, 19, or couples of chains, first and second, respectively, arranged side by side.

The means 2a delimiting the seat upstream sides, are fastened to the first chain 19, or couple of chains, while the means 2b delimiting the seat downstream sides, are fastened to the second chain 18, or couple of chains.

Thus, according to a known method, it is possible to change the distance between the delimiting means of each seat 4, so as to adapt the seat dimension to the width of the blister packs to be boxed.

Obviously, the modes by which the conveyor can be fit to different sizes, thus the structural features thereof, conceived for this purpose, do not prevent the use of the solution claimed hereinafter in cases different from the present one.

Actually, the endless support means 3 can include, as shown, a pair of endless belts 13, 14, first and second, respectively, arranged side by side.

Also in this case, in order to adjust the width of the seats 4, the means 2a delimiting the seat upstream sides are fastened to one of the belt 14, while the means 2b delimiting the seats downstream side, are fastened to the other belt 13.

Obviously, the endless support means 3 can include only one belt or a single chain, or couple of chains, if the seats 4 width is not to be adjusted.

The delimiting means 2 include walls 12, extending continuously along the crosswise section of the conveyor, which includes chains or belts, perpendicular thereto.

In order to lighten or simplify the structure, the delimiting means can include discontinuous means, which, cooperate to define a surface extending continuously along the conveyor crosswise section, perpendicular to the chains or belts.

The blister packs 5 are dropped into the seats 4, along the falling direction C, until a pile P is formed by a predetermined number of packs each time.

The minimum number of blister packs 5 placed in each receiving seat 4 is one.

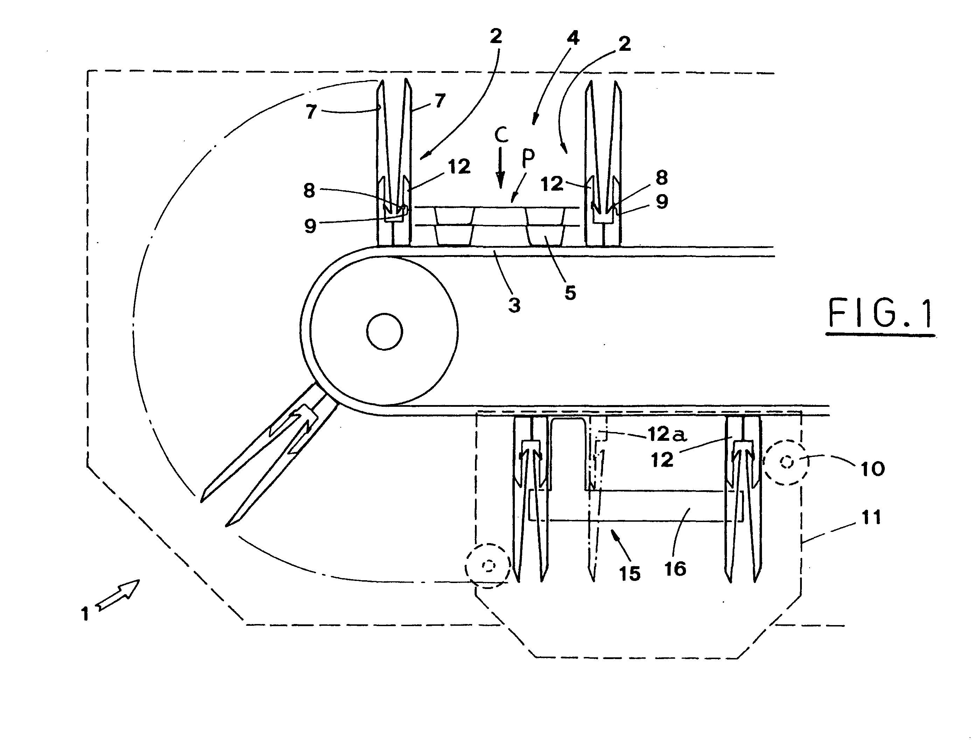

According to the invention, the height of the receiving seats can be changed, in relation to the height of the piles of blister packs P, by applying corresponding extensions 7, removably fixed to the walls 12, as well seen in Figure 1.

The extensions 7 are substantially "V"-like and are made of elastic, metallic or synthetic material.

On the side opposite to the one delimiting the corresponding receiving seat 4, the walls 12 feature a recess 9, inside which a folded edge 8 of the extension 7 snap fitted, so as to fix the extension to the wall 12.

According to a possible variant, the walls 12 feature recesses 9 on both sides, so that the two folded edges 8 made on both arms of the extensions 7 are introduced into the recesses, which face opposite directions.

The folded edge can be substituted by another, similar element, that fulfills the same function, but that can be advantageous for the extensions construction.

Therefore, each extension 7 can slide crosswise to the conveyor and along the wall 12 which supports it, until the extension disengages from the wall 12.

In this way, it is possible to automate the removal of the extensions, e.g. when the height of the pile P of blister packs is changed.

At this point, by acting on screw knobs 10, a protective panel 11 is removed.

Then, the conveyor is moved stepwise and the extensions 7 are withdrawn from the respective walls 12 two by two.

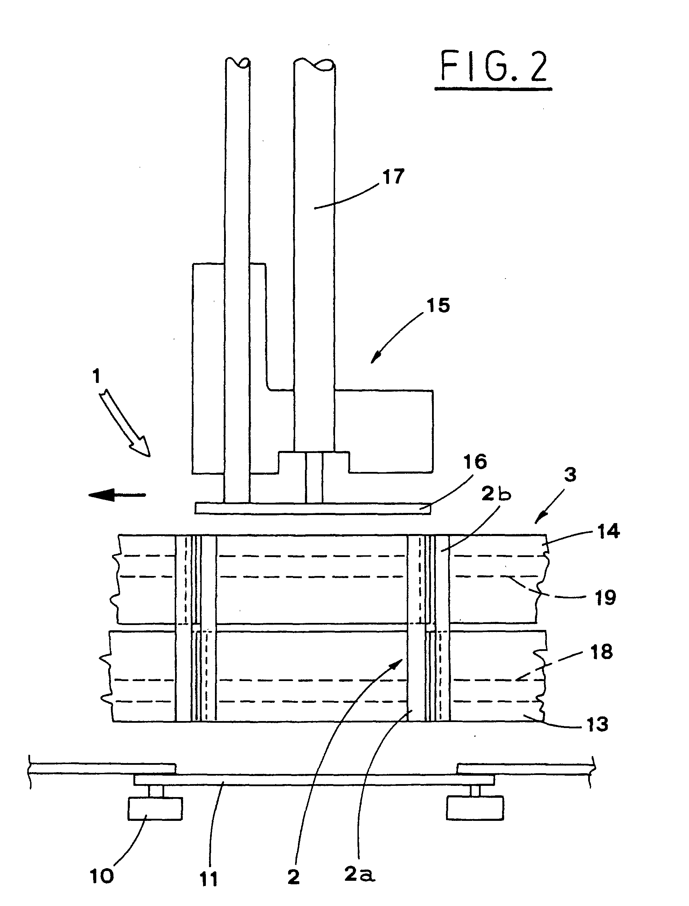

This operation is performed by pushing means 15, including a plate 16, whose length is equal to the maximum distance between the two walls defining a seat 4, and a cylinder actuator 17, which acts crosswise to the conveyor (Figure 2).

A wall 12a, displaced for reducing the dimensions of the receiving seat 4, is shown with broken line in Figure 1.

The figure shows the minimum dimension configuration (wall 12a indicated with broken line) and maximum dimension configuration (wall 12 indicated with continuous line).

It is possible to see that both the above mentioned configurations, as well as the intermediate ones, are covered by the removing plate 16.

After all the extensions 7 have been removed, it is possible to use the conveyor with the walls 12 of basic dimensions only, or to apply a different set of extensions 7, so as to adapt the walls height to a different pile P of blister packs 5.

The proposed technical solution allows to adapt the height of the walls delimiting receiving seats to the actual height of the piles of blister packs situated therein in an easy and rapid way.

Therefore, the packaging machine does not have to be stopped for long periods of time, nor difficult substitution operations requiring the walls disassembling and reassembling, must be performed.

Therefore, the height of the magazine discharge mouth, from which the blister packs are released, can be adapted each time without expensive operations.

The elastic extensions are light and their production is cheap, so it is possible to supply different sets of extensions for different walls heights without a considerable increase of global production costs.

Although particular embodiments of the invention have been describer in detail for purposes of illustration, it is recognized that modifications and variations may readily occur to those skilled in the art, the scope of protection being determined by the appended claims

## Claims

1. A conveyor for blister packs, or piles of blister packs, the conveyor including:
pairs of delimiting means (2), fastened crosswise to endless support means (3), so as to define a series of subsequent seats (4) for receiving said blister packs (5) or piles (P) of blister packs, wherein the first of said delimiting means delimits the upstream side of said seat and the second one of said delimiting seat delimits the downstream side of a neighboring seat;
a plurality of extensions (7), removably fixed to said delimiting means (2) for adapting the height of said receiving seats in relation to the height of said blister packs or piles (P) of blister packs;
said conveyor being **characterized in that** said delimiting means (2) feature, on one side, at least one recess (9), into which a folded edge (8) of a corresponding extension (7) is snap fitted, and on the side opposite to the one defining a corresponding receiving seat (4), at least one recess (9), into which a folded edge (8) of a corresponding extension (7) is snap fitted, the said extension (7) being capable of sliding crosswise to said endless support means (3) until it disengages from said delimiting means (2).

2. A conveyor, according to claim 1, **characterized in that** said extension (7) can slide crosswise to said endless support means (3), until it disengages from said delimiting means (2).

3. A conveyor, according to claim 2. **characterized in that** it includes stationary pushing means (15), which make said extensions (7) slide crosswise to said endless support means (3), along said delimiting means (2), so that said extensions (7) can be withdrawn.

4. A conveyor, according to claim 3, **characterized in that** said pushing means (15) include a plate (16), whose length is equal to the maximum distance between the two adjacent delimiting means (2) defining a receiving seat (4), and a cylinder actuator (17), which acts crosswise to the conveyor.

5. A conveyor, according to claim 1, **characterized in that** said endless support means (3) include at least one pair of chains (18,19), arranged side by side, with the delimiting means (2a) defining the seats upstream side, fastened to the one of the chains (19), and with the delimiting means (2b) delimiting the seats downstream side, fastened to the other chain (18).

6. A conveyor, according to claim 1, **characterized in that** said endless support means (3) include at least one belt or one pair of chain.

7. A conveyor, according to claim 1, **characterized in that** said endless support means (3) include at least one pair of endless belts (13,14) arranged side by side, with the delimiting means (2a) defining the seats upstream side, fastened to the one of the belts (14), and with the delimiting means (2b) delimiting the seats downstream side, fastened to the other belt (13).

8. A conveyor, according to claim 1, **characterized in that** said delimiting means (2) include discontinuous elements, which define a surface extending continuously along the transversal section of said endless support means (3), perpendicular thereto.

## Patentansprüche

1. Eine Fördervorrichtung für Blisterverpackungen oder Stapel von Blisterverpackungen, wobei die Vorrichtung folgendes umfaßt:
Paare von Begrenzungsmitteln (2), die senkrecht an endlosen Stützmitteln (3) befestigt sind, um eine von Reihe aufeinanderfolgenden Aufnahmen (4) für die Aufnahme der besagten Blisterverpackungen (5) oder der Stapel (P) von Blisterverpackungen zu bilden, wobei das erste der besagten Begrenzungsmittel die stromaufwärts gerichtete Seite der besagten Aufnahme abgrenzt und das zweite der besagten Begrenzungsmittel die stromabwärts gerichtete Seite einer benachbarten Aufnahme abgrenzt;
eine Anzahl von Ansätzen (7), die lösbar mit den besagten Begrenzungsmitteln (2) verbunden sind, um die Höhe der besagten Aufnahmen in Bezug auf die Höhe der besagten Blisterverpackungen oder der Stapel (P) von Blisterverpackungen anzupassen;
wobei die besagte Vorrichtung **dadurch gekennzeichnet ist, daß** die besagten Begrenzungsmittel (2) auf einer Seite wenigstens eine Aussparung (9) aufweisen, in die ein gefalteter Rand (8) eines entsprechenden Ansatzes (7) einrastet, und daß auf der Seite, die derjenigen, die eine entsprechende Aufnahme (4) bildet, gegenüberliegt, wenigstens eine Aussparung (9) vorgesehen ist, in die ein gefalteter Rand (8) eines entsprechenden Ansatzes (7) einrastet, wobei der besagte Ansatz (7) derart ausgebildet ist, daß er senkrecht zu den besagten endlosen Stützmitteln (3) so weit verschieblich ist, daß er sich von den besagten Begrenzungsmitteln (2) löst.

2. Eine Vorrichtung gemäß Anspruch 1, **dadurch gekennzeichnet, daß** der besagte Ansatz (7) senkrecht zu den besagten endlosen Stützmitteln (3) so weit bewegbar ist, bis er außer Eingriff mit den besagten Begrenzungsmitteln (2) gelangt.

3. Eine Vorrichtung gemäß Anspruch 2, **dadurch gekennzeichnet, daß** sie stationäre Betätigungsmittel (15) umfaßt, die die besagten Ansätze (7) senkrecht zu den besagten endlosen Stützmitteln (3) entlang den besagten Begrenzungsmitteln (2) so weit verschieben, daß die besagten Ansätze (7) entfernt werden können.

4. Eine Vorrichtung gemäß Anspruch 3, **dadurch gekennzeichnet, daß** die besagten Betätigungsmittel (15) eine Platte (16) umfassen, deren Länge dem maximalen Abstand zwischen den zwei angrenzenden Begrenzungsmitteln (2) entspricht, die eine Aufnahme (4) bilden, sowie einen zylindrischen Stellantrieb (17), der senkrecht zur Fördervorrichtung wirkt.

5. Eine Vorrichtung gemäß Anspruch 1, **dadurch gekennzeichnet, daß** die besagten endlosen Stützmittel (3) wenigstens ein Paar Ketten (18, 19) umfassen, die nebeneinander angeordnet sind, wobei das Begrenzungsmittel (2a) die stromaufwärts gerichtete Seite der Aufnahme bildet, die an der Kette (19) befestigt ist, und wobei das Begrenzungsmittel (2b) die stromabwärts gerichtete Seite der Aufnahme begrenzt, das an der anderen Kette (18) befestigt ist.

6. Eine Vorrichtung gemäß Anspruch 1, **dadurch gekennzeichnet, daß** die besagten endlosen Stützmittel (3) wenigstens einen Riemen oder ein Paar Ketten umfassen.

7. Eine Vorrichtung gemäß Anspruch 1, **dadurch gekennzeichnet, daß** die besagten endlosen Stützmittel (3) wenigstens ein Paar endloser Riemen (13, 14) umfassen, die nebeneinander angeordnet sind, wobei das Begrenzungsmittel (2a) die stromaufwärts gerichtete Seite der Aufnahme bildet, das an einem der Riemen (14) befestigt ist, und wobei das Begrenzungsmittel (2b) die stromabwärts gerichtete Seite der Aufnahme begrenzt, die an dem anderen Riemen (13) befestigt ist.

8. Eine Vorrichtung gemäß Anspruch 1, **dadurch gekennzeichnet, daß** die besagten Begrenzungsmittel (2) unterbrochene Elemente aufweisen, die eine Oberfläche bilden, die sich kontinuierlich entlang dem transversalen Abschnitt der besagten endlosen Stützmittel (3) und senkrecht zu diesem erstreckt.

## Revendications

1. Transporteur pour emballages blisters ou piles d'emballages blisters, le transporteur incluant :
des paires de moyens de délimitation (2), fixés transversalement sur des moyens de support sans fin (3), de manière à définir une série de sièges successifs (4) pour recevoir lesdits emballages blisters (5) ou piles (P) d'emballages blisters, le premier desdits moyens de délimitation délimitant le côté amont dudit siège et le deuxième desdits moyens de délimitation délimitant le côté aval d'un siège voisin ;
une pluralité de prolongements (7), fixés de manière amovible sur lesdits moyens de délimitation (2) pour adapter la hauteur desdits sièges de réception par rapport à la hauteur desdits emballages blisters ou des piles (P) d'emballages blisters ;
ledit transporteur étant **caractérisé en ce que** lesdits moyens de délimitation (2) présentent, d'un côté, au moins un évidement (9) dans lequel un bord plié (8) d'un prolongement correspondant (7) est inséré par encliquetage et, sur le côté opposé à celui définissant un siège de réception correspondant (4), au moins un évidement (9) dans lequel un bord plié (8) d'un prolongement correspondant (7) est inséré par encliquetage, ledit prolongement (7) étant capable de coulisser transversalement par rapport auxdits moyens de support sans fin (3) jusqu'à ce qu'il se dégage desdits moyens de délimitation (2).

2. Transporteur selon la revendication 1, **caractérisé en ce que** ledit prolongement (7) peut coulisser transversalement par rapport auxdits moyens de support sans fin (3) jusqu'à ce qu'il se dégage desdits moyens de délimitation (2).

3. Transporteur selon la revendication 2, **caractérisé en ce qu'**il inclut des moyens stationnaires de poussée (15) qui font coulisser lesdits prolongements (7) transversalement par rapport auxdits moyens de support sans fin (3) le long desdits moyens de délimitation (2), de sorte que lesdits prolongements (7) peuvent être retirés.

4. Transporteur selon la revendication 3, **caractérisé en ce que** lesdits moyens de poussée (15) incluent une plaque (16), dont la longueur est égale à la distance maximale entre les deux moyens de délimitation (8) adjacents définissant un siège de réception (4), et un actionneur cylindrique (17) qui agit transversalement par rapport au transporteur.

5. Transporteur selon la revendication 1, **caractérisé en ce que** lesdits moyens de support sans fin (3) incluent au moins une paire de chaînes (18, 19), disposées l'une près de l'autre, avec les moyens de délimitation (2a) définissant les sièges côté amont, fixés à l'une des chaînes (19), et avec les moyens de délimitation (2b) délimitant les sièges côté aval, fixés à l'autre chaîne (18).

6. Transporteur selon la revendication 1, **caractérisé en ce que** lesdits moyens de support sans fin (3) incluent au moins une courroie ou une paire de chaînes.

7. Transporteur selon la revendication 1, **caractérisé en ce que** lesdits moyens de support sans fin (3) incluent au moins une paire de courroies sans fin (13, 14) disposées l'une près de l'autre, avec les moyens de délimitation (2a) définissant les sièges côté amont, fixés à l'une des courroies (14), et avec les moyens de délimitation (2b) délimitant les sièges côté aval, fixés à l'autre courroie (13).

8. Transporteur selon la revendication 1, **caractérisé en ce que** lesdits moyens de support sans fin (3) incluent des éléments discontinus, qui définissent une surface s'étendant continuellement le long de là section transversale desdits moyens de support sans fin (3), perpendiculaire à ceux-ci.
